Europäisches Patentamt

European Patent Office

Office européen des brevets

(19)

(11) Publication number : **0 056 457 B2**

# (12) NEW EUROPEAN PATENT SPECIFICATION

(45) Date of publication of the new patent specification : **12.06.91 Bulletin 91/24**

(51) Int. Cl.⁵ : **B60C 11/04**

(21) Application number : **81110172.4**

(22) Date of filing : **04.12.81**

(54) Pneumatic tyre for motor vehicles with tread pattern.

(30) Priority : **05.12.80 IT 2649080**

(43) Date of publication of application :
**28.07.82 Bulletin 82/30**

(45) Publication of the grant of the patent :
**09.12.87 Bulletin 87/50**

(45) Mention of the opposition decision :
**12.06.91 Bulletin 91/24**

(84) Designated Contracting States :
**AT BE CH DE FR GB LI LU NL SE**

(56) References cited :
**DE-A- 2 127 470**
**GB-A- 2 014 091**

(56) References cited :
**US-A- 2 756 798**
**US-A- 4 055 209**
**US-A- 4 278 121**
**GUMMIBEREIFUNG, vol. 52, no. 2, March 1976, page 51, V12GT, Biehlefeld, DE.**

(73) Proprietor : **PIRELLI COORDINAMENTO PNEUMATICI Società per Azioni**
**Piazzale Cadorna, 5**
**I-20123 Milan (IT)**

(72) Inventor : **Caretta, Renato**
**Viale dei Tigli, 16**
**Gallarate (Varese) (IT)**

(74) Representative : **Dr. Elisabeth Jung Dr. Jürgen Schirdewahn Dipl.-Ing. Claus Gernhardt**
**P.O. Box 40 14 68 Clemensstrasse 30**
**W-8000 München 40 (DE)**

EP 0 056 457 B2

## Description

The present invention concerns pneumatic tires for motor-vehicles and in particular it relates to the raised pattern, usually known and hereinafter indicated as "tread pattern", provided in the zone of the outer surface of the tire intended to come into contact with the road.

It is in fact known that in pneumatic tires the radially outer surface, which extends axially from one tire sidewall to the other, is provided with a plurality of grooves obtained in the thickness of the tread band and arranged in various ways in order to divide the band into ribs or ridges and/or blocks, mutually spaced from one another by said grooves. The ridges and blocks are further provided with "lamels", namely thin slits directed from the outer surface towards the tire inside which slits have a variable depth and which sometimes can reach the sides of the ribs or ridges and blocks.

The design formed by the grooves and the slots constitutes the tread pattern, which is a typical and characterizing element of the tire, and which is variable in accordance with the use to which the latter is to be subjected.

By way of example, the tires of the "winter" type have a pattern provided with a high number of blocks and deep grooves in order to increase road holding on the snowy or muddy ground peculiar of the winter season, whilst the tread pattern of the tires to be used on roads in good maintenance state and under normal weather and service conditions is usually characterixed by large circumferential ridges sometimes having a zig-zag path, from which depart further transversal grooves, generally much thinner than the former, more or less inclined and long, which is some cases intersect completely the longitudinal ridges. Sometimes these ridges are provided with a further series of slits.

In fact, the main purpose of such patterns is that of breaking the liquid layer existing between the tire and the road when the road is wet (for instance when it rains), ensuring therefore a high manoeuvrability, a satisfactory driving stability and a good grip on wet ground.

Tread patterns of such a type must however possess in a high degree some behaviour characteristics which until now had been considered of minor importance in said special patterns, in favour of an improvement of the features more necessary in the specific use.

In other words, the patterns indicated as "normal", to which belongs the pattern forming the object of the invention hereinafter described, must possess in the highest degree some features as : uniform wear, silent run and comfort, which features are considered of minor importance in special patterns like those used for winter, rally, off-road tires and so on.

Unfortunately, said features are in reciprocal opposition ; for instance the uniform wear is the result of a tread pattern in which the ratio between solid and hollow areas, called "filling coefficient" is high, namely the result of a compact tread, having scarcely movable blocks below the impression area and therefore a few thin grooves ; all this has a relevant negative effect on the tire behaviour in respect of the aquaplaning phenomenon.

In fact, to avoid aquaplaning, the pattern must have widely spaced blocks provided with several slits, that is many large grooves and therefore a low value of the filling coefficient. These features which increase in a large degree the mobility of the blocks below the impression area, affect in a negative sense the achievement of a uniform and reduced wear.

Furthermore, patterns of this kind are in general rather noisy, even so smooth roads in good condition, because − owing to their peculiar characteristics − they originate a series of acoustic phenomena, that is main waves and their harmonics, of particular frequency and often resonant with each other, which are very difficult to eliminate.

There is also known from GB-A 2 014 091 a pneumatic tire for motor vehicles, comprising on its radially outer surface a tread band the pattern of which comprises two continuous longitudinal grooves symmetrical to the tire mid-line, which divide the tread band into at least one central continuous circumferential ridge, and two laterally outer portions divided by means of a plurality of generally axial transversal grooves into a plurality of blocks, the sides of the at least one continuous ridge comprising oblique transversal grooves oriented in oblique direction with respect to the axial direction, said oblique directions being all inclined in the same sense. In this known tire the blocks are provided in an interleaving arrangement in an area the width of which corresponds about to the axial length of two blocks. Moreover, the transversal grooves separating the blocks are provided in a zig-zag-configuration, the legs of which are arranged obliquely. A tire according to the preamble of claim 1 is known, e.g., from GB-A-918988.

The technical problem to be solved by the invention is to provide a tire which constitutes a very good compromise between low road noise and good road traction on wet ground, in other words between good winter and good summer characteristic.

Said problem is solved by the features of claim 1.

The present invention will be better understood with reference to the following description made with reference to the attached drawings given by way of non-limiting example, in which :

Figure 1 shows an embodiment of a tread pattern according to the invention having two central ridges and two rows of lateral blocks ; and

Figure 2 shows a further embodiment of a tread pattern according to the invention having an arrangement like that shown in Figure 1.

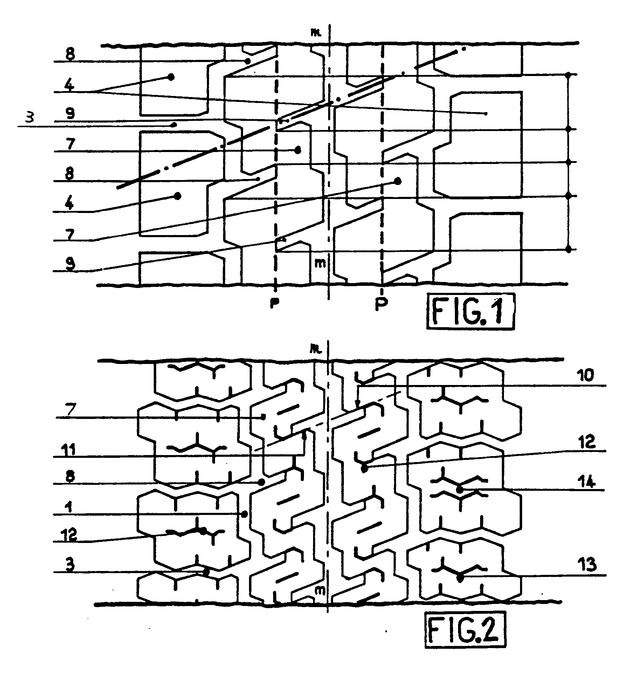

Figure 1 illustrates an embodiment of the tread pattern according to the invention which comprises first of all three longitudinal grooves, namely a central groove arranged at the tire midline m-m, and two lateral grooves symmetrical with respect to said midline.

This arrangement originates two central circumferential ridges 7 and two lateral circumferential rows of blocks 4.

Each ridge 7 is provided on both edges with a series of axially outer slits 8 and of axially inner slits 9. According to the invention, said slits are all inclined in the same way (namely in the same sense) with respect to the axial direction ; the inclination angle $\phi$ is preferably ranging between 15° and 35°.

In this embodiment the axially inner slit ends in each ridge 7 are all lying in a single plane p.

According to a further advantageous embodiment the two adjacent axially inner slits 9 of the ridges 7 are aligned along the same axis, constituting consequently a single groove, parallel to but distinct from the axially outer slits 8.

A further advantageous feature is represented by the fact that the projection of all of said grooves along the tire circumferential direction (for the sake of clearness indicated laterally in Figure 1) form a continuous line, preferably not containing superimposed segments.

At last, Figure 2 illustrates a further alternative embodiment drawn on the basis of the arrangement of Figure 1 ; said Figure 2 does not contain the reference numerals which concern elements already shown in Figure 1, since the identification of said elements in this pattern should be quite easy ; however – different from what is shown in Figure 1 – in the present embodiment the axially inner grooves of said ridges have their circumferentially adjacent edges 10 and 11 aligned along the same line.

The latter tread, illustrated in detail also with reference to its slits 12, shows two advantageous features which enhance the satisfactory results obtained with the pattern according to the invention ; more precisely, the transversal grooves 3 which separate the blocks from one another, are facing the axially outer oblique slits 8 of the two central ridges, facilitating therefore a quick and strong discharge of the water present on the road surface, which is collected by grooves 1 of the pattern ; in addition a variation of the circumferential dimension of the blocks as that between blocks 13 and 14, has the advantageous result of breaking the sequence of acoustic waves-having harmonic frequencies – which are instead generated in periodically repeated equal elements of the pattern with a convenient reduction of noise in particular of the well known tire squeal. Moreover, Figure 2 shows that in circumferential direction the distance between successive oblique grooves of the ridges corresponds to the different circumferential dimensions of, for example, blocks 13 and 14.

The Applicant thinks that the favourable results obtained with the tire in accordance with the invention, in particular as regards its modest wear, uniform rolling and low road noise, can be attributed in particular to the inclination of the slits in the ridge edges.

In fact, from the conventional patterns generally used it is known that when a transversal groove extends below the impression area, the edge of the corresponding block strikes against the road and the block deforms moving under the impression area.

First of all the strike through the tire is directly transmitted to the car body, thus giving rise to a nonuniform rolling, and secondly it causes a pressure wave on the air volume contained in the groove, which wave cooperates in increasing the tire noise, in particular the acoustic phenomenon known as tire squeal ; moreover, the movement of the block under the impression area is the main factor responsible of the tread wear, in particular when this is premature, irregular and relevant.

For this reason the most silent and least wearable tire would be in conclusion a completely smooth tire, because it does not show differentiated impact fronts, namely discontinuities consequent to the alternate sequence of solid and hollow areas in the tire rolling surface.

Obviously the above described tire could not be used for normal road service, owing to its absolute lack of traction on wet ground.

The inventive principle followed by the Applicant in the embodiment of this pattern was that of recreating this continuity between the various impact fronts of the transversal recesses which enter and come out of the impression area during the tire rolling, maintening at the same time the subdivision of the tread band, which ensures a good behaviour of the tire in respect of aquaplaning.

To better understand said principle, reference can be made to a comparision between a helical teeth gear and a straight-teeth gear ; in the latter case each tooth, meshing with ist corresponding tooth, originates a strike and the rolling movement takes place by jerks, with a consequent noise and irregular motion.

In the helical teeth gear, each tooth meshes with its corresponding tooth before the separation of the pair of the corresponding teeth which precedes it in the motion ; the result is a silent motion and a uniform rolling.

In the Applicant's opinion this result is achieved also in the tire according to the invention which in comparison with the conventional tires shows better values as regards abrasion, regular wear and uniform rolling ; in this connection mention is still made of the fact that the projection of the oblique slits in circumferential direction is represented by a continuous line, namely one devoid of discontinuous zones.

Further, the Applicant ascertained that the pattern according to the invention, in particular in the embodiment of Figure 2, in which the solid/hollow spaces ration, i.e. the filling coefficient is 0.69, shows a noise level equal to that of the patterns in which the filling coefficient is at least equal to 0.73, namely of very compact patterns.

## Claims

1. A pneumatic tire for motor vehicles, comprising on its radially outer surface a tread band the pattern of which comprises two continuous longitudinal grooves (1) symmetrical to the tire midline (m-m), which divide the tread band into a central portion containing at least one central continuous circumferential ridge (7), and two laterally outer portions (4) divided by means of a plurality of generally axial transversal grooves (3) into a plurality of blocks (4 ; 13 ; 14), the sides of the at least one continuous ridge (7) comprising oblique transversal grooves (8, 9) oriented in oblique direction with respect to the axial direction, each laterally outer portion consisting of a single row of circumferentially arranged blocks (4 ; 13, 14) the ends of said transversal grooves (3) are lying on a line parallel to the tire axis, characterized in that said oblique directions, are all inclined in the same sense and the projection of said oblique transversal grooves (8, 9) within said central portion along the circumferential direction of the tire constitutes a continuous line, without any superimposition of segments.

2. A pneumatic tire according to claim 1, characterized in that there are provided two central continuous circumferential ridges (7) which are separated by a central continuous longitudinal groove.

3. A pneumatic tire as in claim 2, characterized in that the axially inner oblique grooves (9) of said ridges (7) are aligned along the same line forming a single oblique groove extending at both ends within the sides of the two adjacent ridges (7).

4. A pneumatic tire according to any one of claims 1 to 3, characterized in that at least some of the oblique transversal grooves (8, 9) are substantially facing the transversal grooves (3) being on a line parallel to the tire axis.

5. A pneumatic tire according to claim 1, characterized in that each oblique transversal groove on one side of the continuous ridge is on the same axis as an oblique transversal groove on the opposite side of the continuous ridge.

6. A pneumatic tire as in claim 1, characterized in that each of said oblique transversal grooves (8 or 9) has an axis of its own distinct from that of the other oblique transversal grooves.

7. A pneumatic tire as in any of claims 1 to 6, characterized in that in each ridge (7) the axially inner ends of the oblique transversal grooves (8, 9) with respect to their position in the ridge are lying all in a plane (p) perpendicular to the tire axis.

8. A pneumatic tire as in claim 7, characterized in that said planes (p) are two, each relative to all the oblique transversal grooves (8, 9) of a ridge (7) and in that each mutual axial distance does not exceed 30% of the maximum width of the ridge.

9. A pneumatic tire as in claim 7, characterized in that said oblique transversal grooves (e.g. 8) extend from the edge substantially not beyond the middle plane of the ridge (7) containing them.

10. A pneumatic tire as in claim 8 and 9, characterized in that said two planes coincide into a single plane coincident with the middle plane of the ridge.

11. A pneumatic tire as in any of the preceding claims, characterised in that the inclination angle ($\phi$) of said oblique transversal grooves (8, 9) with respect to the axial direction of the tire is ranging between 15° and 35°.

12. A pneumatic tire as in any of the preceding claims, characterized in that the circumferential ridges (7) formed by the longitudinal grooves (1) have all the substantially same width.

13. A pneumatic tire as in any of the preceding claims, characterized in that in each row of circumferentially arranged blocks (4, 13, 14) the adjacent blocks (13, 14) have different dimensions in the circumferential direction.

## Ansprüche

1. Luftreifen für Kraftfahrzeuge, wobei der Luftreifen an seiner radial äußeren Fläche einen Laufstreifen aufweist, dessen Muster zwei kontinuierliche Längsrillen (1) symmetrisch zur Mittellinie (m-m) des Reifens hat, welche den Laufstreifen in einen mittleren Teil, der wenigstens eine mittlere kontinuierliche Umfangsrippe (7) aufweist, und zwei seitliche äußere Teile (4) unterteilen, die mittels einer Mehrzahl von allgemein axialen Querrillen (3) in eine Mehrzahl von Blöcken (4 ; 13, 14) unterteilt sind, wobei die Seiten der wenigstens einen kontinuierlichen Umfangsrippe (7) schräge Querrillen (8, 9) aufweisen, die mit Bezug auf die axiale Richtung in schräger Richtung orientiert sind, und wobei jeder seitliche äußere Teil aus einer einzigen Reihe von in Umfangsrichtung angeordneten Blöcken (4 ; 13, 14) besteht und die Enden der Querrillen (3) auf einer Linie parallel zur Reifenachse liegen, dadurch gekennzeichnet, daß die schrägen Richtungen sämtlich in gleichem Sinn schräg verlaufen und die Projektion der schrägen Querrillen (8, 9) innerhalb des mittleren Teiles entlang der Umfangsrichtung des Reifens eine kontinuierliche Linie darstellt, ohne daß Segmente übereinander liegen.

2. Luftreifen nach Anspruch 1, dadurch gekennzeichnet, daß zwei mittlere kontinuierliche

Umfangsrippen (7) vorgesehen sind, die durch eine mittlere kontinuierliche Längsrille getrennt sind.

3. Luftreifen nach Anspruch 2, dadurch gekennzeichnet, daß die axial inneren schrägen Rillen (9) der Rippen (7) entlang der gleichen Linie ausgerichtet sind, die eine einzige schräge Rille bildet, die sich an beiden Enden in die Seiten der beiden benachbarten Rippen (7) erstreckt.

4. Luftreifen nach einem der Ansprüche 1 bis 3, dadurch gekennzeichnet, daß wenigstens gewisse der schrägen Querrillen (6 ; 8, 9) im wesentlichen den Querrillen (3) zugewandt sind, die auf einer Linie parallel zur Reifenachse liegen.

5. Luftreifen nach Anspruch 1, dadurch gekennzeichnet, daß jede schräge Querrille (5 oder 6) auf einer Seite der kontinuierlichen Rippe (2) auf der gleichen Achse wie eine schräge Querrille (6 oder 5) auf der gegenüberliegenden Seite der kontinuierlichen Rippe liegt.

6. Luftreifen nach Anspruch 1, dadurch gekennzeichnet, daß jede der schrägen Querrillen (8 oder 9) eine eigene Achse hat, die von der Achse der anderen schrägen Querrillen verschieden ist.

7. Luftreifen nach einem der Ansprüche 1 bis 6, dadurch gekennzeichnet, daß in jeder Rippe (7) die axial inneren Enden der schrägen Querrillen (8, 9) mit Bezug auf ihre Position in der Rippe sämtlich in einer Ebene (p) rechtwinkelig zur Reifenachse liegen.

8. Luftreifen nach Anspruch 7, dadurch gekennzeichnet, daß zwei Ebenen (p) vorhanden sind, die jedweils zu allen schrägen Querrillen (8, 9) einer Rippe (7) gehören, und daß jeder gegenseitige axiale Abstand 30% der maximalen Breite der Rippe nicht übersteigt.

9. Luftreifen nach Anspruch 7, dadurch gekennzeichnet, daß die schrägen Querrillen (beispielsweise 8) sich von der Kante im wesentlichen nicht über die Mittelebene der Rippe (7), welche sie enthält hinaus erstrecken.

10. Luftreifen nach Anpruch 8 oder 9, dadurch gekennzeichnet, daß die genannten beiden Ebenen in einer einzigen Ebene zusammenfallen, die mit der Mittelebene der Rippe zusammenfällt.

11. Luftreifen nach irgendeinem der vorhergehenden Ansprüche, dadurch gekennzeichnet, daß der Schrägwinkel (φ) der schrägen Querrillen (8, 9) mit Bezug zur axialen Richtung des Reifens im Bereich zwischen 15° und 35° liegt.

12. Luftreifen nach irgendeinem der vorhergehenden Ansprüche, dadurch gekennzeichnet, daß die Umfangsrippen (7), die durch die Längsrillen (1) gebildet sind, sämtlich im wesentlichen die gleich Breite haben.

13. Luftreifen nach irgendeinem der vorhergehenden Ansprüche, dadurch gekennzeichnet, daß in jeder Reihe von in Umfangsrichtung angeordneten Blöcken (4 ; 13, 14) die benachbaren Blöcke (13, 14) in Umfangsrichtung unterschiedliche Abmessungen haben.

## Revendications

1. Un pneumatique pour véhicules automobiles, comprenant sur sa surface radialement extérieure une bande de roulement dont le dessin comprend deux rainures longitudinales continues (1) symétriques par rapport à la ligne médiane (m-m) du pneumatique, qui divisent la bande de roulement en une partie centrale qui contient au moins une nervure circonférentielle centrale continue (7), et deux parties latéralement extérieures (4) divisées au moyen d'une pluralité de rainures transversales axiales dans l'ensemble (3) sous la forme d'une pluralité de blocs (4 ; 13, 14), les cotés de la nervure continue (7) au moins prévue comprenant des nervures transversales obliques (8, 9) orientées dans une direction oblique par rapport à la direction axiale, chaque partie latéralement extérieure comprenant une seule rangée de blocs réparties circonférentiellement (4 ; 13, 14) et les extrémités desdites rainures transversales (3) étant situées sur une ligne parallèle à l'axe du pneumatique, caractérisé en ce que lesdites direction obliques étant toutes inclinées dans le même sens, et la projection desdites rainures transversales obliques (8, 9) dans la partie centrale le long de la direction circonférentielle du pneumatique constitue une ligne continue, sans aucune superposition de segments.

2. Pneumatique selon la revendication 1, caractérisé en ce qu'il est prévu deux nervures circonférentielles continues centrales (7) qui sont séparées par une rainure longitudinale continue centrale.

3. Pneumatique selon la revendication 2, caractérisé en ce que les rainures obliques axialement intérieures (99) desdites nervures (7) sont alignées le long de la même ligne en formant une seule rainure oblique s'étendant aux deux extrémités à l'intérieur des côtés des deux nervures adjacentes (7).

4. Pneumatique selon une quelconque des revendications 1 à 3, caractérisé en ce qu'au moins certaines des rainures transversales obliques (6 ; 8, 9) sont placées sensiblement en regard des rainures transversales (3) situées sur une ligne parallèle à l'axe du pneumatique.

5. Pneumatique selon la revendication 1, caractérisé en ce que chaque rainure transversale oblique (5 ou 6) placée d'un côté de la nervure continue (2) est située sur le même axe qu'une rainure transversale oblique (6 ou 5) placée sur le côté opposé de la nervure continue.

6. Pneumatique selon la revendication 1, caractérisé en ce que chacune desdites rainures transversales obliques (8 ou 9) comporte un propre axe qui est distinct de celui des autres rainures transversales obliques.

7. Pneumatique selon une quelconque des revendications 1 à 6, caractérisé en ce que, dans chaque nervure (7), les extrémités axialement intérieures des rainures transversales obliques (8, 9) sont toutes situées, en ce qui concerne leurs positions dans la nervure, dans un plan (p) perpendiculaire à l'axe du pneumatique.

8. Pneumatique selon la revendication 7, caractarisée en ce que lesdits plans (p) sont au nombre de deux, chacun correspondant à toutes les rainures transversales obliques (8, 9) d'une nervure et en ce que chaque distance axiale mutuelle ne doit pas dépasser 30% de la largeur maximale de la nervure.

9. Pneumatique selon la revendication 7, caractérisé en ce que lesdites rainures transversales obliques (par exemple 8) s'étendent à partir du bord qui n'est pratiquement pas situé au delà du plan médian de la nervure (7) les contenant.

10. Pneumatique selon les revendications 8 et 9, caractérisé en ce que les deux plans précités coïncident sous la forme d'une seul plan en coïncidence avec le plan médian de la nervure.

11. Pneumatique selon une quelconque des revendications précédentes, caractérisé en ce que l'angle d'inclinaison ($\phi$) desdites rainures transversales obliques (8, 9) par rapport à la direction axiale du pneumatique est compris entre 15° et 35.

12. Pneumatique selon une quelconque des revendications précédentes, caractérisé en ce que les nervures circonférentielles (7) formées par les rainures longitudinales (1) ont toutes sensiblement la même largeur.

13. Pneumatique selon une quelconque des revendications précédentes, caractérisé en ce que, dans chaque rangée de blocs répartis circonférentiellement (4 ; 13, 14), les blocs adjacents (13, 14) ont des dimensions différentes dans la direction circonférentielle.

FIG.1

FIG.2